# EUROPEAN PATENT APPLICATION

(11) **EP 4 741 959 A1**
(43) Date of publication of application: **13.05.2026**
(21) Application number: 25211324.6
(22) Date of filing: 27.10.2025
(51) Int. Cl.: G05B 19/4065, B23B 25/06, B23Q 17/00

(54) **MACHINE TOOL**

(30) Priority: 12.11.2024 JP 2024197633
(71) Applicant: Star Micronics Co., Ltd., Shizuoka-shi, Shizuoka 422-8654 (JP)
(72) Inventor: Kagawa, Yuki, Shizuoka-shi, Shizuoka (JP); Shigama, Koichiro, Shizuoka-shi, Shizuoka (JP); Deno, Masatoshi, Shizuoka-shi, Shizuoka (JP); Saito, Hiroki, Shizuoka-shi, Shizuoka (JP)
(74) Representative: Grünecker Patent- und Rechtsanwälte PartG mbB

(57) **Abstract**

There is provided a machine tool that can precisely determine a gripping failure.

An NC lathe that includes a first spindle including a collet chuck that grips a material of a bar shape, and machines the material gripped by the collet chuck and manufactures a plurality of products having an identical shape by repeatedly executing a machining operation includes determination means for executing determination on a gripping failure of the first spindle based on at least one information of machining timing information and gripping force history information, and current gripping force information, the machining timing information indicating at which timing the machining operation is performed, the gripping force history information being information of a gripping force at a time when the collet chuck grips the material during the machining operations up to the previous machining operation, and the current gripping force information being information of a gripping force at a time when the collet chuck grips the material during a current machining operation.

## Description

### CROSS-REFERENCES

The application claims priority of Japanese Patent Application No. 2024-197633 filed on November 12, 2024. The contents of this application are incorporated herein by reference in their entirety.

### BACKGROUND OF THE INVENTION

### 1. Field of the Invention

The present invention relates to a machine tool that machines a material gripped by a spindle.

### 2. Description of the Related Art

There are known machine tools that each machine a bar-shaped material gripped by a spindle (see, for example, Japanese Patent Application Publication No. 2020-97075). The spindle is rotatably supported by a headstock. The spindle is provided with a gripping unit whose state changes between a gripping state for gripping a workpiece and a release state for releasing grip of a material. Furthermore, there has been also proposed a safety monitoring system that determines a gripping failure of a gripping unit by attaching a sensor to the gripping unit (see, for example, Japanese Patent Application Publication No. 2011-121148).

### SUMMARY OF THE INVENTION

However, the safety monitoring system according to Japanese Patent Application Publication No. 2011-121148 performs abnormality determination based on only an output of the sensor attached to the gripping unit, and has a problem that the safety monitoring system can only make uniform determination and has difficulty in precisely determining the gripping failure of the gripping unit.

With the above-described problem in view, an object of the present invention is to provide a machine tool that can precisely determine a gripping failure.

A machine tool according to the present invention that solves the above problem is a machine tool that includes a spindle including a gripping unit that grips a material of a bar shape, and machines the material gripped by the gripping unit and manufactures a plurality of products having an identical shape by repeatedly executing a machining operation, and includes determination means for executing determination on a gripping failure of the spindle based on at least one information of machining timing information and gripping force history information, and current gripping force information, the machining timing information indicating at which timing the machining operation is performed, the gripping force history information being information of a gripping force at a time when the gripping unit grips the material during the machining operations up to the previous machining operation, and the current gripping force information being information of a gripping force at a time when the gripping unit grips the material during a current machining operation.

According to this machine tool, the determination means executes determination on the gripping failure based on at least one information of the machining timing information and the gripping force history information, and the current gripping force information, so that it is possible to precisely determine a gripping failure.

Here, this machine tool may execute a plurality of cycles of the machining operation whose one cycle is to manufacture one product. The determination means may classify a type of the gripping failure to determine. Furthermore, the determination means may classify a gripping failure per cause to determine.

In this machine tool, the determination means may determine that, when the machining timing information is information indicating the first machining operation and when a gripping force of the current gripping force information is outside of a predetermined range, a gripping failure due to a setup mistake is occurring.

According to this machine tool, it is specified that the gripping failure is caused by the setup mistake, so that it is easy to deal with the failure.

This machine tool may be connected with a bar feeder in which a plurality of the materials are stored, and that sequentially supplies the stored materials to the spindle, and the determination means may determine that, when the machining timing information is information indicating the machining operation immediately after the bar feeder newly supplies the material to the spindle and when the gripping force of the current gripping force information is outside of a predetermined range, a gripping failure due to a material diameter failure of the material supplied by the bar feeder is occurring.

This machine tool specifies that the gripping failure is caused by the material diameter failure, and consequently easily deals with the failure.

In this machine tool, the determination means may determine that, when a change amount of the gripping force of the current gripping force information with respect to the gripping force of the gripping force history information exceeds the threshold, the gripping failure is occurring.

By so doing, for example, it is possible to determine catch of a small foreign material in the gripping unit as a gripping failure.

Furthermore, in this machine tool, the determination means may classify a type of a gripping failure based on whether the gripping force of the current gripping force information with respect to the gripping force of the gripping force history information has increased or decreased when the change amount exceeds the threshold.

By so doing, it is possible to accurately classify types of gripping failures.

Furthermore, this machine tool may include a control apparatus that, when the change amount exceeds the threshold and when the gripping force of the current gripping force information with respect to the gripping force of the gripping force history information increases, executes a removal operation of removing a foreign material caught in the gripping unit.

When the change amount exceeds the threshold and the gripping force of the current gripping force information increases with respect to the gripping force of the gripping force history information, there is a high probability that the foreign material such as chips has been caught in the gripping unit. By performing the removal operation, it is possible to reduce a risk that the foreign material caught in the gripping unit damages the material. Furthermore, it is possible to reduce a risk that the gripping failure stops the machining operation.

Here, the removal operation may include an operation of causing the gripping unit to release grip of the material. Furthermore, the removal operation may include an operation of causing the gripping unit to release grip of the material and move the spindle. Furthermore, the removal operation may include an operation of causing the gripping unit to release grip of the material and discharging a fluid toward the gripping unit.

Furthermore, in this machine tool, the determination means may classify a type of the gripping failure based on a combination of whether or not the gripping force of the current gripping force information is outside of a predetermined range and whether or not a change amount of the gripping force of the current gripping force information with respect to the gripping force of the gripping force history information exceeds a threshold.

This machine tool can more precisely determine the type of the gripping failure.

In addition, this machine tool may include
a tool post to which a tool that machines the material is attached and that moves together with the tool;
storage means for storing a movement correction value for correcting a designated movement position designated by a machining program; and
correction value rewriting means for rewriting the movement correction value stored in the storage means, and
the correction value rewriting means may rewrite the movement correction value stored in the storage means when the determination means determines that the gripping force of the current gripping force information is outside of a predetermined range and a change amount of the gripping force of the current gripping force information with respect to the gripping force of the gripping force history information does not exceed a threshold.

When the gripping force of the gripping unit gradually changes due to thermal displacement or the like, the correction value rewriting means rewrites the movement correction value to an appropriate value in response to this change, so that machining accuracy increases.

According to the present invention, it is possible to provide a machine tool that can precisely determine a gripping failure.

### BRIEF DESCRIPTION OF THE DRAWINGS

FIG. 1 is a plan view briefly illustrating an internal configuration of an NC lathe according to the present embodiment;
FIG. 2 is a cross-sectional view illustrating a first headstock and a first spindle illustrated in FIG. 1 cut along a horizontal plane passing the axis of the first spindle and seen from the above;
FIG. 3 is a perspective cross-sectional view illustrating the first headstock and the first spindle by cutting part of the first headstock illustrated in FIG. 1;
FIG. 4 is a control block diagram of the NC lathe illustrated in FIG. 1;
FIG. 5 is a flowchart illustrating a first machining operation that uses the first spindle illustrated in FIG. 1;
FIG. 6 is a flowchart illustrating the first machining operation that uses the first spindle illustrated in FIG. 1;
FIG. 7 is a graph showing an example of a gripping force for each gripping operation of a first spindle 4 from a first machining operation to a last machining operation;
FIG. 8 is a flowchart illustrating a second machining operation that uses a second spindle illustrated in FIG. 1; and
FIG. 9 is a flowchart illustrating the second machining operation that uses the second spindle illustrated in FIG. 1.

### DETAILED DESCRIPTION

An embodiment of the present invention will be described below with reference to the drawings. The present embodiment will be described with reference to an example where the present invention is applied to a Swiss-type Numerical Control (NC) lathe. That is, the NC lathe to be described below corresponds to an example of a machine tool.

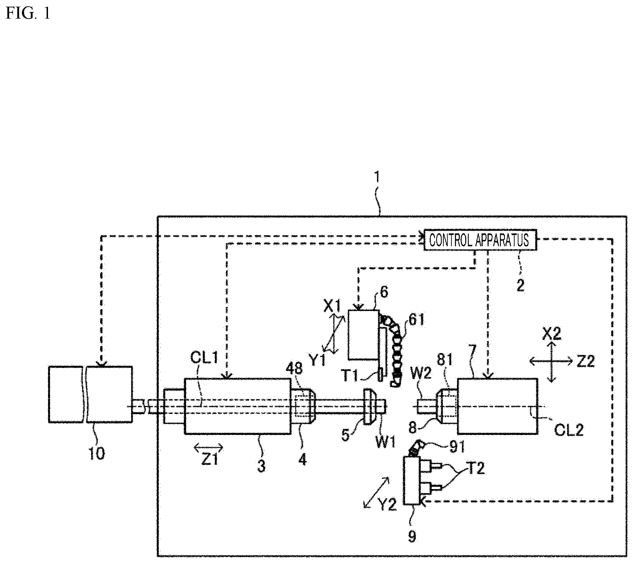

FIG. 1 is a plan view briefly illustrating an internal configuration of an NC lathe 1 according to the present embodiment. This FIG. 1 also illustrates a bar feeder 10.

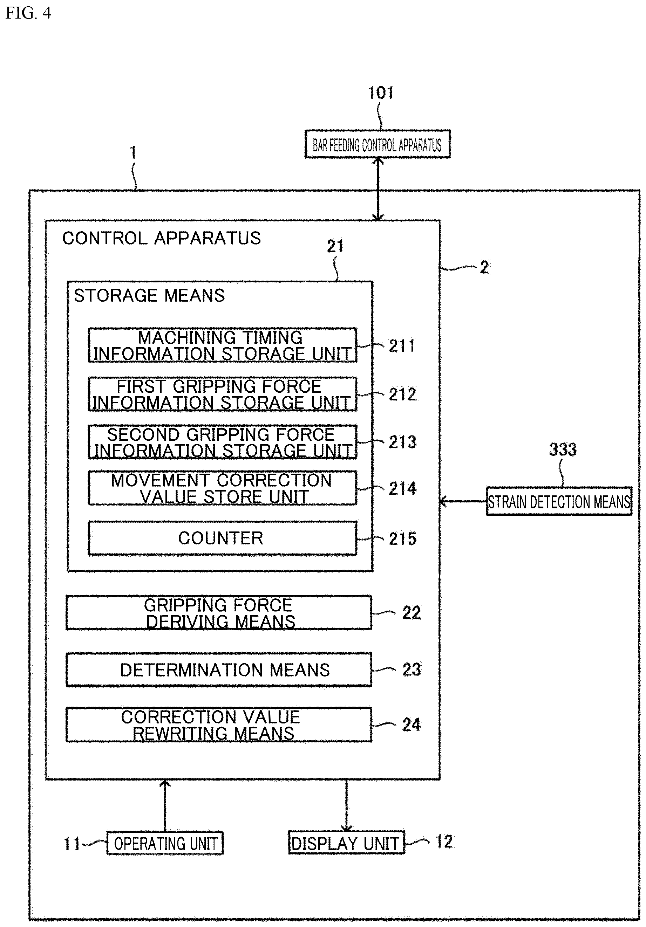

As illustrated in FIG. 1, the NC lathe 1 is internally provided with a control apparatus 2, a first headstock 3, a first spindle 4, a guide bush 5, a first tool post 6, a second headstock 7, a second spindle 8, and a second tool post 9. Furthermore, the NC lathe 1 is connected with the bar feeder 10. These NC lathe 1 and bar feeder 10 form an NC lathe system. This NC lathe system corresponds to an example of a machine tool system. The control apparatus 2 is a computer that causes the first headstock 3, the first spindle 4, the first tool post 6, the second headstock 7, the second spindle 8, and the second tool post 9 to operate according to an NC program. Note that, by directly inputting a command from an operating unit 11 (see FIG. 4) to the control apparatus 2 in addition to an operation that uses the NC program, it is also possible to cause the NC lathe 1 to operate.

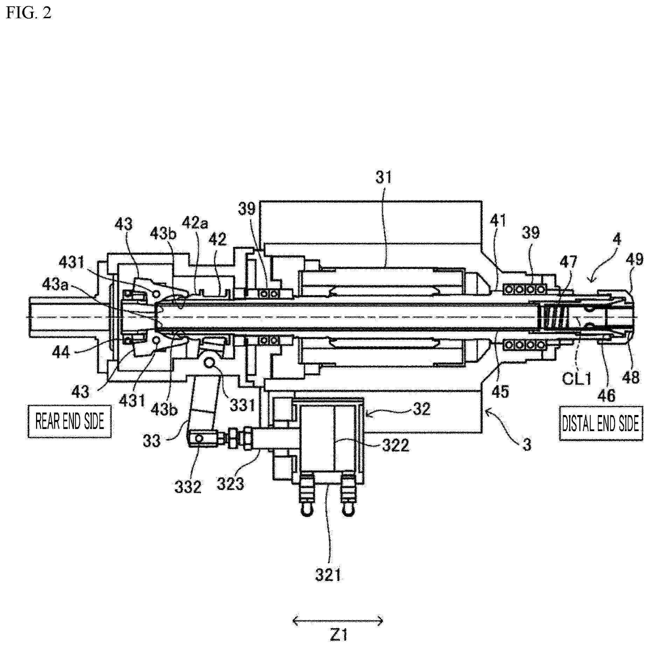

The first headstock 3 moves in a Z1-axis direction together with the first spindle 4 according to a signal from the control apparatus 2. The Z1-axis direction is a horizontal direction, and is a left/right direction in FIG. 1. The first spindle 4 is rotatably supported in the first headstock 3. Furthermore, the first headstock 3 is provided with a first spindle motor 31 (see FIG. 2) between the first headstock 3 and the first spindle 4. When this first spindle motor 31 receives the signal from the control apparatus 2 and rotates, the first spindle 4 rotates about a first axis CL1. The direction of the first axis CL1 matches with the Z1-axis direction.

The first spindle 4 changes a state between a gripping state where the first spindle 4 grips an elongated, bar-shaped material W1 inserted into the first spindle 4, and a release state where the first spindle 4 releases the grip of the material W1. This first spindle 4 corresponds to an example of a spindle. The material W1 gripped by the first spindle 4 rotates about the first axis CL1 together with the first spindle 4 when the first spindle 4 rotates. The configurations of the first headstock 3 and the first spindle 4 will be described in detail later. A collet chuck 48 to be described in detail later is provided at a distal end side portion of the first spindle 4. This collet chuck 48 corresponds to an example of a gripping unit.

The guide bush 5 is fixed to the interior of the NC lathe 1. The guide bush 5 supports a distal end portion of the material W1 protruding from the first spindle 4 slidably in the Z1-axis direction. The portion of this guide bush 5 that supports the material W1 can rotate about the first axis CL1 in synchronization with the first spindle 4. In other words, the first axis CL1 is also the rotation axis of the portion of the material W1 that is supported by the guide bush 5. The guide bush 5 is provided and suppresses warp of the material W1 at a time of machining, so that it is possible to accurately machine the long and thin material W1 in particular.

The first tool post 6 is movable in an X1-axis direction that is perpendicular to the Z1-axis direction and is directed to the horizontal direction, and a Y1-axis direction that is directed to a vertical direction. This first tool post 6 corresponds to an example of a tool post. The first tool post 6 moves in the X1-axis direction and the Y1-axis direction upon reception of a signal from the control apparatus 2.
In FIG. 1, the upper/lower direction is the X1-axis direction, and a direction that is perpendicular to the paper surface is the Y1-axis direction. First spindle tools T1 that machine the material W1 are attached to the first tool post 6. FIG. 1 illustrates that the first spindle tools T1 have been attached to the first tool post 6. A plurality of types of the first spindle tools T1 including a cutting tool for outer diameter machining, a cutting tool for cut-off machining, and the like are attached to the first tool post 6 side by side in the Y1-axis direction. When the first tool post 6 moves in the Y1-axis direction, the arbitrary first spindle tool T1 is selected from the plurality of these types of first spindle tools T1. Furthermore, when the first tool post 6 moves in the X1-axis direction, the selected first spindle tool T1 cuts into the material W1 gripped by the first spindle 4 to machine the material W1. Furthermore, the first tool post 6 is provided with a first coolant discharge unit 61 that discharges a coolant toward the first spindle tools T1 and the material W1.

The second headstock 7 moves in an X2-axis direction and a Z2-axis direction together with the second spindle 8 according to a signal from the control apparatus 2. The X2-axis direction is the same direction as the X1-axis direction described above, and the Z2-axis direction is the same direction as the Z1-axis direction described above. An unillustrated second spindle motor such as a built-in motor is provided to the second headstock 7. When this second spindle motor receives the signal from the control apparatus 2 and rotates, the second spindle 8 rotates about a second axis CL2. The direction of the second axis CL2 matches with the Z2-axis direction.

A cut material W2 that has been machined using the first spindle 4 and cut by the cutting tool for cut-off machining is passed to the second spindle 8. The second spindle 8 changes a state between a gripping state where the second spindle 8 grips the cut material W2 passed from the first spindle 4, and a release state where the second spindle 8 releases the grip of the cut material W2. This second spindle 8 corresponds to an example of a spindle. The cut material W2 gripped by the second spindle 8 rotates about the second axis CL2 together with the second spindle 8 when the second spindle 8 rotates. A second collet chuck 81 is provided at a distal end side portion of the second spindle 8. In a case where the second spindle 8 is a spindle, this second collet chuck 81 corresponds to an example of a gripping unit.

The second tool post 9 moves in a Y2-axis direction in response to a signal from the control apparatus 2. This Y2-axis direction is the same direction as the above-described Y1-axis direction, that is, the vertical direction. A plurality of second spindle tools T2 that machine the cut material W2 gripped by the second spindle 8 are attached to the second tool post 9. FIG. 1 illustrates that the second spindle tools T2 are attached to the second tool post 9. The plurality of types of second spindle tools T2 such as a drill and an endmill are attached to the second tool post 9. The second spindle tools T2 are attached side by side not only in the X2-axis direction but also in the Y2-axis direction. When the second headstock 7 moves in the X2-axis direction and the second tool post 9 moves in the Y2-axis direction, the arbitrary second spindle tool T2 is selected from the plurality of these types of second spindle tools T2. Furthermore, when the second headstock 7 moves in the Z2-axis direction, a cut end side portion of the cut material W2 gripped by the second spindle 8 is machined. Furthermore, the second tool post 9 is provided with a second coolant discharge unit 91 that discharges a coolant toward the second spindle tool T2, the cut material W2 or the second spindle 8.

The bar feeder 10 is an apparatus that supplies an elongated, bar-shaped material W1 to the NC lathe 1. The bar feeder 10 is installed side by side with the NC lathe 1 and closer to the rear end side than the first spindle 4. A plurality of the materials W1 are stored in the bar feeder 10. The bar feeder 10 includes a built-in bar feeding control apparatus 101 (see FIG. 4) that controls the bar feeder 10. The bar feeding control apparatus 101 operates the bar feeder 10 according to a command from the control apparatus 2 of the NC lathe 1. Furthermore, state information of the bar feeder 10 is transmitted to the control apparatus 2 as appropriate. The bar feeder 10 pulls out a remaining material that is the material W1 that has become short as a result of a machining operation of the NC lathe 1 from the NC lathe 1 and discharges the remaining material according to the command from the control apparatus 2. Furthermore, the bar feeder 10 sequentially feeds and supplies the new material W1 to the NC lathe 1 after discharging the remaining material. The operation of pulling out and discharging this remaining material from the NC lathe 1 and feeding the new material W1 to the NC lathe 1 corresponds to an exchange operation of the material W1.

FIG. 2 is a cross-sectional view of the first headstock 3 and the first spindle 4 illustrated in FIG. 1 cut along a horizontal plane passing the first axis CL1 and seen from above. Note that a hatching indicating a cross-section is not assigned to the drawings used to describe the present embodiment.

As illustrated in FIG. 2, the first spindle 4 has a generally cylindrical shape having the axis in the direction of the first axis CL1. The first spindle 4 is rotatably supported in the first headstock 3 by a bearing 39. The first spindle 4 includes a spindle main body 41, a shifter 42, claw members 43, an adjustment nut 44, a push sleeve 45, a chuck sleeve 46, a coil spring 47, a collet chuck 48, and a spindle cap 49.

The spindle main body 41 is a cylindrical body that is a base of the first spindle 4, and extends in the Z1-axis direction. The shifter 42 is disposed on a rear end side of the first spindle 4. Note that, in FIG. 2, the left side of the figure is the rear end side of the first spindle 4, and the right side of the figure is the distal end side of the first spindle 4. The shifter 42 has a generally cylindrical shape, and is attached to the spindle main body 41 such that the shifter 42 is slidably movable in the Z1-axis direction when an inner circumferential surface thereof comes into sliding contact with the outer circumferential surface of the spindle main body 41. As illustrated in FIG. 2, a cam surface 42a is formed on the outer circumferential surface of the shifter 42. The cam surface 42a includes a small diameter surface that is the smallest and has a constant outer diameter, a changing surface whose outer diameter gradually becomes larger, and a large diameter surface that is the largest and has a constant outer diameter in order from the rear end side of the first spindle 4. This shifter 42 slides and moves in the Z1-axis direction by driving an air cylinder 32. FIG. 2 illustrates that the shifter 42 is positioned on the distalmost end side of the first spindle 4.

The two claw members 43 are attached to the spindle main body 41 swingably about a claw shaft 431. A claw distal end portion 43b that acts as a cam follower in contact with the cam surface 42a of the shifter 42 is formed at the distal end portion of this claw member 43. The claw distal end portion 43b approaches or moves away from the first axis CL1 along the cam surface 42a in response to sliding movement of the shifter 42, and the claw member 43 swings about the claw shaft 431 as the swing center. A sleeve push part 43a is formed on the claw member 43, and this sleeve push part 43a is in contact with the rear end of the push sleeve 45.

The adjustment nut 44 is screwed to the spindle main body 41 at a rearmost end portion of the first spindle 4. A female screw is formed on the inner side of the adjustment nut 44, and enmeshes with a male screw formed at the rear end portion of the spindle main body 41. By rotating the adjustment nut 44 in a direction to fasten, the claw member 43, the push sleeve 45, and the chuck sleeve 46 move toward the distal end side of the first spindle 4 together with the adjustment nut 44. Thus, the inner diameter of the collet chuck 48 in the gripping state becomes relatively small, and the gripping force of the first spindle 4 for the material W1 (see FIG. 1) becomes high. Conversely, by rotating the adjustment nut 44 in a direction to unfasten, the claw member 43, the push sleeve 45, and the chuck sleeve 46 move toward the rear end side of the first spindle 4 together with the adjustment nut 44. Thus, the inner diameter of the collet chuck 48 in the gripping state becomes relatively large, and the gripping force of the first spindle 4 for the material W1 becomes low. That is, the gripping force for the material W1 in the gripping state of the first spindle 4 is adjusted by the adjustment nut 44. The adjustment nut 44 has a C shape having a cutout along the radial direction when seen from the rear end side to the distal end side of the first spindle 4, and the width of this cutout portion can be changed by an unillustrated fixing screw. After adjusting the gripping force using the adjustment nut 44 is completed, the adjustment nut 44 is fixed to the spindle main body 41 at an adjusted position by narrowing the width of the cutout portion by this fixing screw.

The push sleeve 45 is a cylindrical body disposed inside of the spindle main body 41, and the distal end thereof is in contact with a rear end portion of the chuck sleeve 46. The push sleeve 45 and the chuck sleeve 46 move in a direction opposite to the shifter 42 when the shifter 42 moves in the Z1-axis direction. More specifically, when the shifter 42 slides and moves toward the rear end side of the first spindle 4, the claw distal end portion 43b of the claw member 43 is pushed up by the cam surface 42a of the shifter 42, and moves in a direction away from the first axis CL1. Thus, the push sleeve 45 and the chuck sleeve 46 are pushed by the sleeve push part 43a of the claw member 43 to move toward the distal end side of the first spindle 4, the diameter of the collet chuck 48 is reduced, and the first spindle 4 is in a gripping state where the first spindle 4 grips the material W1.

Conversely, when the shifter 42 slides and moves toward the distal end side of the first spindle 4, the claw distal end portion 43b of the claw member 43 moves along the cam surface 42a of the shifter 42 in a direction to approach the first axis CL1. Thus, the push sleeve 45 and the chuck sleeve 46 move toward the rear end side of the first spindle 4, the diameter of the collet chuck 48 is expanded, and the first spindle 4 is in a release state where the first spindle 4 releases the grip of the material W1.

The coil spring 47 pushes the chuck sleeve 46 toward the rear end side at all times, and pushes the collet chuck 48 toward the distal end side at all times. Thus, the push sleeve 45 is also pushed toward the rear end side via the chuck sleeve 46, and the push sleeve 45 pushes the sleeve push part 43a toward the rear end side.

The distal end part inner circumferential surface of the chuck sleeve 46 is a tapered surface whose diameter becomes larger toward the distal end side. A distal end part outer circumferential surface of the collet chuck 48 is a tapered surface whose diameter becomes larger toward the distal end side. The collet chuck 48 includes three slots formed thereon in total every 120°, continuing from the distal end to a hole formed in the vicinity of the center in the Z1-axis direction, and separated in a circumferential direction. These hole and slots make it possible to expand and reduce the diameter of the distal end side of the collet chuck 48 in particular in the radial direction. Since the chuck sleeve 46 is positioned on the rear end side in the release state indicated in FIG. 2, there is little force of the distal end part inner circumferential surface of the chuck sleeve 46 for pushing the distal end part outer circumferential surface of the collet chuck 48 toward the inside in the radial direction, and the diameter of the collet chuck 48 is expanded by own elasticity. Conversely, since the chuck sleeve 46 is positioned on the distal end side in the gripping state, the distal end part inner circumferential surface of the chuck sleeve 46 pushes the distal end part outer circumferential surface of the collet chuck 48 toward the inside in the radial direction, and the diameter of the collet chuck 48 is reduced.

The spindle cap 49 is a spindle cap of a bowl shape including a circular cap through-hole formed at a center portion and penetrating in the Z1-axis direction. When a distal end surface of the collet chuck 48 comes into contact with a portion corresponding to a bottom part of this bowl shape, the spindle cap 49 regulates movement of the collet chuck 48 toward the distal end side. The collet chuck 48 is pushed by the coil spring 47 and thereby pressed against the spindle cap 49 at all times. The spindle cap 49 is fixed to the spindle main body 41 when a female screw part formed on an inner side of an edge part of this bowl shape enmeshes with a male screw part formed at a distal end portion of the spindle main body 41.

The first headstock 3 includes a first spindle motor 31, the air cylinder 32, and a shifter lever 33. The first spindle motor 31 is a built-in motor provided to the first headstock 3. As described above, by rotating and driving the first spindle motor 31, the first spindle 4 rotates about the first axis CL1 supported by the first headstock 3 via the bearing 39.

The air cylinder 32 includes a cylinder tube 321, a piston 322, and a piston rod 323. The cylinder tube 321 is a housing for the air cylinder 32 and has a cylindrical shape. The piston 322 is disposed in the cylinder tube 321 so as to be movable in contact with the inner circumferential surface of the cylinder tube 321 to one side and the other side. The piston rod 323 has a bar shape whose one end is fixed to the piston 322. The other end of the piston rod 323 is connected to the shifter lever 33. By supplying air to the air cylinder 32, the piston 322 moves, and the piston rod 323 advances or retreats to and from the cylinder tube 321. FIG. 2 illustrates that the piston 322 moves to the other side the most and the piston rod 323 advances the most.

The shifter lever 33 is swingable about a lever shaft 331 as the swing center. One end of the shifter lever 33 is rotatably connected to the other end of the piston rod 323 by a connection pin 332. Furthermore, the other end of the shifter lever 33 is connected to the shifter 42. By driving the air cylinder 32, the shifter lever 33 swings, and this swing slides and moves the shifter 42 in the Z1-axis direction. The above-described air cylinder 32, shifter lever 33, shifter 42, claw members 43, push sleeve 45, chuck sleeve 46, and coil spring 47 form a collet expansion/contraction mechanism that expands or contracts the collet chuck 48.

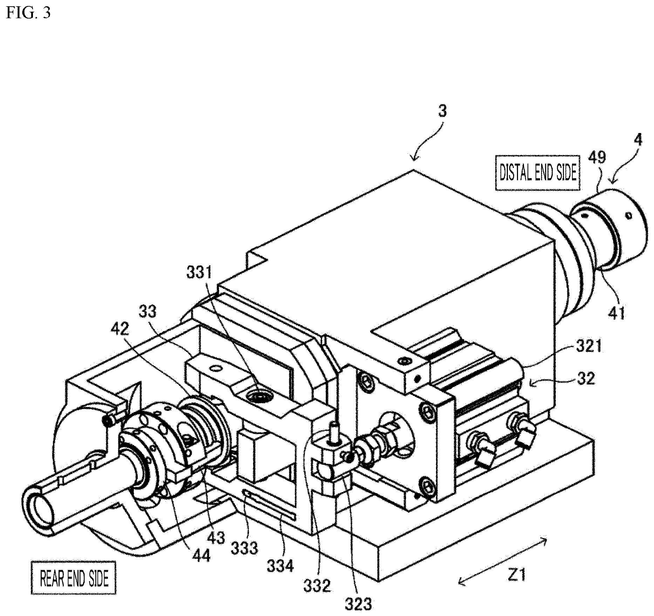

FIG. 3 is a perspective cross-sectional view illustrating the first headstock 3 and the first spindle 4 by cutting part of the first headstock 3 illustrated in FIG. 1.

As illustrated in FIG. 3, the shifter lever 33 has a substantially U shape seen from the rear end side to the distal end side. Strain detection means 333 is attached to the side surface on the rear end side of the shifter lever 33. The strain detection means 333 is a so-called strain gauge that detects a strain produced in the shifter lever 33 when the driving force of the air cylinder 32 is transmitted from the air cylinder 32 to the collet chuck 48 (see FIG. 2). The strain detection means 333 is connected with a signal line 334. A signal of the strain detected by the strain detection means 333 is transmitted to the control apparatus 2 (see FIG. 1) through the signal line 334. This strain detection means 333 detects the strain of the shifter lever 33 produced at a portion at which the strain detection means 333 is attached.

Since the configuration of the second spindle 8 that grips and releases the grip of the cut material W2 illustrated in FIG. 1 is the same as those of the first headstock 3 and the first spindle 4, detailed description thereof will be omitted. Note that the second headstock 7 includes an unillustrated second shifter lever, and unillustrated second strain detection means for detecting a strain produced in the second shifter lever is attached to this second shifter lever. Furthermore, the second spindle 8 is provided with a known air blowing apparatus that blows air from the rear end side toward the distal end side of the second spindle 8 along the outer peripheral surface of the cut material W2 inside of the second spindle 8. The operation of the air blowing apparatus is controlled by the control apparatus 2. The cut material W2 of this second spindle 8 corresponds to an example of a material.

FIG. 4 is a control block diagram of the NC lathe 1 illustrated in FIG. 1. Note that FIG. 4 illustrates only a control configuration that is particularly highly relevant to the present embodiment.

As illustrated in FIG. 4, the NC lathe 1 includes the operating unit 11 and a display unit 12 as interfaces for an operator. The operating unit 11 is an input apparatus for operating the NC lathe 1. The operating unit 11 includes a plurality of buttons, keys, and the like for accepting input operations performed by the operator of the NC lathe 1. Note that the operating unit 11 may be also a touch panel that is integrated with the display unit 12. The display unit 12 is a display that displays various information related to the NC lathe 1 such as the NC program, various setting values, error contents, and the like.

The control apparatus 2 includes storage means 21, gripping force deriving means 22, determination means 23, and correction value rewriting means 24. The storage means 21 stores a control program, the NC program, various information, and the like, and includes a nonvolatile memory and a volatile memory. Furthermore, the storage means 21 includes a machining timing information storage unit 211, a first gripping force information storage unit 212, a second gripping force information storage unit 213, a movement correction value storage unit 214, and a counter 215.

The NC lathe 1 manufactures a plurality of products having the identical shape by repeatedly executing a machining operation of one cycle according to the NC program. Every time the machining operation of this one cycle is executed, one product is manufactured. In many cases, the machining operation of one cycle includes a first machining operation that uses the first spindle 4, and a second machining operation that uses the second spindle. In this regard, a product may be manufactured only by the first machining operation depending on the shape of the product. A gripping command that is a command to grip the material W1 is executed at an initial stage of the first machining operation. Furthermore, a gripping command that is a command to grip the cut material W2 is also executed at an initial stage of the second machining operation.

In the machining timing information storage unit 211, information on which timing of a machining operation a current machining operation is from start of a first machining operation to completion of a last machining operation is stored. Information on which timing of the machining operation this current machining operation is corresponds to an example of machining timing information. More specifically, information indicating the first machining operation, and information indicating a machining operation immediately after exchange of the material W1 is executed and the new material W1 is newly supplied to the first spindle 4 are stored in the machining timing information storage unit 211.

In the first gripping force information storage unit 212, information of a gripping force for the material W1 is stored every time the collet chuck 48 grips the material W1 from start of the first machining operation. The gripping force of the collet chuck 48 for the material W1 is derived by the gripping force deriving means 22 to be described later. The information of the gripping force stored in the first gripping force information storage unit 212 is also added with information of the time at which the gripping force has been stored. Note that, if the information indicates the order of grip, the information added to the information of the gripping force may be information of other times or may be order information such as the order of storage. Of the information of the gripping force stored in this first gripping force information storage unit 212, the information of the gripping force at a time when the collet chuck 48 has gripped the material W1 during the previous machining operation will be referred to as first gripping force history information in the following description. This first gripping force history information corresponds to an example of gripping force history information. Furthermore, of the information of the gripping force stored in this first gripping force information storage unit 212, the information of the gripping force at a time when the collet chuck 48 has gripped the material W1 during the current machining operation will be referred to as first current gripping force information in the following description. This first current gripping force information corresponds to an example of current gripping force information. Note that, of the information of the gripping force stored in the first gripping force information storage unit 212, information of an average value of gripping forces at a time when the collet chuck 48 has gripped the material W1 during a plurality of times of (e.g., two times in total of the last time and the time before last) machining operations of the previous and prior machining operations may be the first gripping force history information.

In the second gripping force information storage unit 213, information of a gripping force for the cut material W2 is stored every time the second collet chuck 81 grips the cut material W2 from start of the first machining operation. The gripping force of the second collet chuck 81 for the cut material W2 is also derived by the gripping force deriving means 22. The information of the gripping force stored in the second gripping force information storage unit 213 is also added with information of the time at which the gripping force has been stored. If the information indicates the order of grip, the information added to the information of the gripping force may be information of other times or may be order information such as the order of storage. Of the information of the gripping force stored in this second gripping force information storage unit 213, the information of the gripping force at a time when the second collet chuck 81 has gripped the cut material W2 during the previous machining operation will be referred to as second gripping force history information in the following description. This second gripping force history information corresponds to an example of gripping force history information. Furthermore, of the information of the gripping force stored in this second gripping force information storage unit 213, the information of the gripping force at a time when the second collet chuck 81 has gripped the cut material W2 during the current machining operation will be referred to as second current gripping force information in the following description. This second current gripping force information corresponds to an example of current gripping force information. Note that, of the information of the gripping force stored in the second gripping force information storage unit 213, for example, information of an average value of gripping forces at a time when the second collet chuck 81 has gripped the cut material W2 during a plurality of times of machining operations of previous and prior machining operation may be second gripping force history information.

A movement correction value for correcting a movement position of the first tool post 6 is stored in the movement correction value storage unit 214. By moving the first tool post 6 to a position obtained by taking the movement correction value into account for a position designated by the NC program, the control apparatus 2 corrects an error caused by wear of the first spindle tools T1, wear of components of the NC lathe 1, thermal displacement of each member, and the like. Consequently, it is possible to increase machining accuracy and execute the first machining operation. Furthermore, a second movement correction value for correcting a movement position of the second headstock 7 is also stored in the movement correction value storage unit 214. The control apparatus 2 moves the second headstock 7 and the second tool post 9 to a position obtained by taking the second movement correction value into account, so that it is possible to increase machining accuracy and execute the second machining operation.

The counter 215 stores the numbers of times of specific operations of the NC lathe 1. The numbers of times of these specific operations include the number of times of machining operations that is the number of machined products, the number of times of operations of removing foreign materials from the first spindle 4, the number of times of operations of removing foreign materials from the second spindle 8, and the number of times of re-machining operations. The contents of these removal operations and re-machining operation will be described later. Hereinafter, a counter indicating the number of times of machining operations will be referred to as a number-of-times-of-manufacturing counter, a counter indicating the number of times of removal operations for the first spindle 4 will be referred to as a first number-of-times-of-removal counter, a counter indicating the number of times of removal operations for the second spindle 8 will be referred to as a second number-of-times-of-removal counter, and a counter indicating the number of times of re-machining operations will be referred to as a re-machining counter.

The gripping force deriving means 22 derives the gripping force of the collet chuck 48 for the material W1 based on the strain of the shifter lever 33 detected by the strain detection means 333 during a period taken until the first spindle 4 grips the material W1 after starting the gripping operation. The gripping force deriving means 22 includes relation data between a maximum value of a strain produced in the strain detection means 333 portion when the shifter lever 33 swings, and the gripping force of the collet chuck 48 for the material W1. Furthermore, the gripping force of the collet chuck 48 for the material W1 is derived using this relation data every time the collet chuck 48 grips the material W1. Furthermore, similarly, the gripping force deriving means 22 derives the gripping force of the second spindle 8 for the cut material W2 every time the second spindle 8 grips the cut material W2.

The determination means 23 executes determination on a gripping failure of the collet chuck 48 based on at least one information of the machining timing information stored in the machining timing information storage unit 211 and the first gripping force history information stored in the first gripping force information storage unit 212, and the first current gripping force information stored in the first gripping force information storage unit 212. Furthermore, the determination means 23 executes determination on a gripping failure of the second collet chuck 81 based on at least one information of the machining timing information stored in the machining timing information storage unit 211 and the second gripping force history information stored in the second gripping force information storage unit 213, and the second current gripping force information stored in the second gripping force information storage unit 213. These determination operations will be described in detail later with reference to flowcharts.

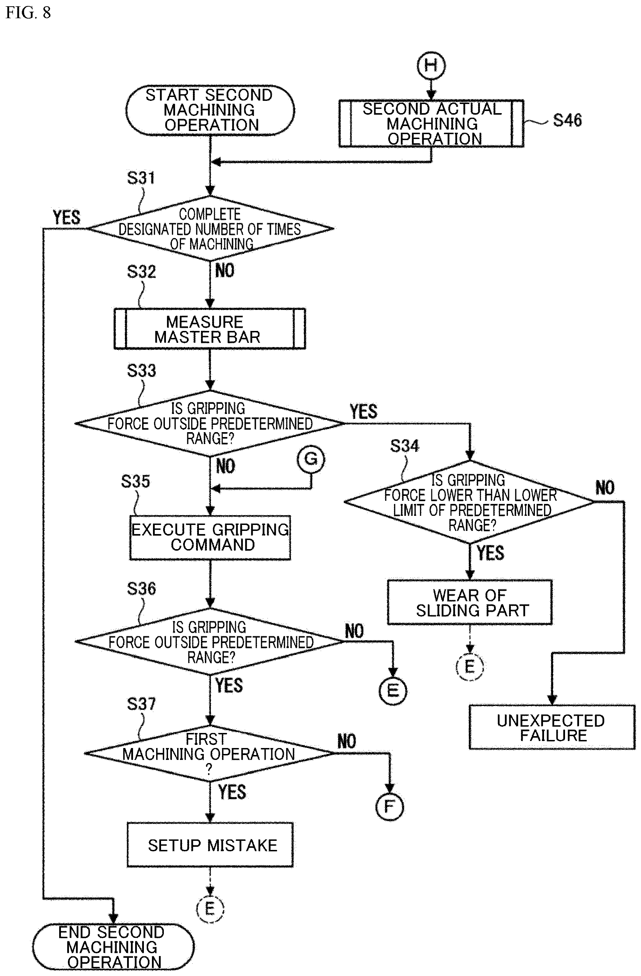

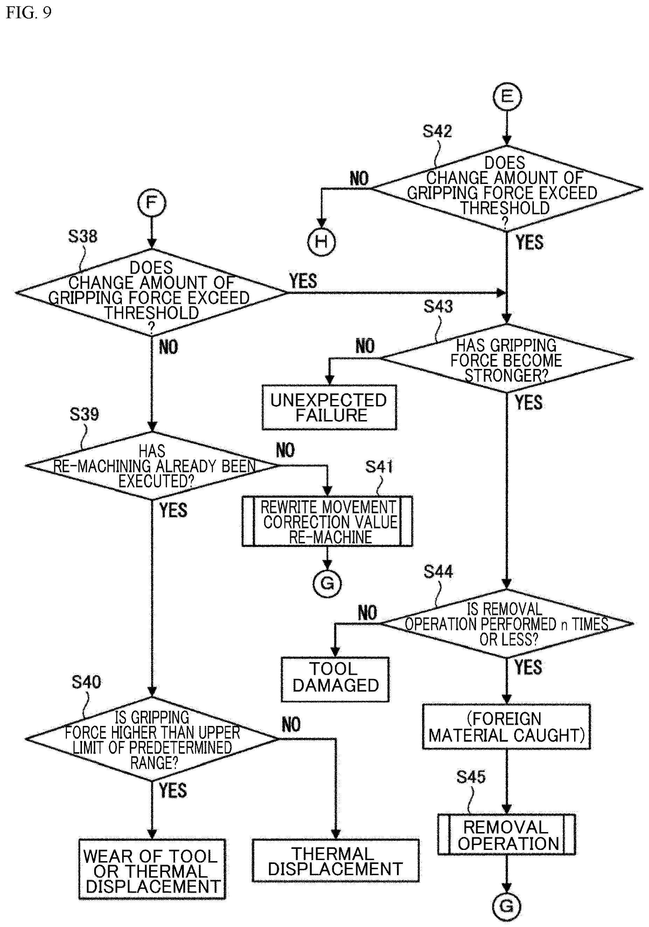

The correction value rewriting means 24 rewrites the movement correction value stored in the movement correction value storage unit 214 when a predetermined condition is satisfied. This predetermined condition is that the determination means 23 determines that the gripping force of the second current gripping force information is outside of a predetermined range and a change amount of the gripping force of the second current gripping force information with respect to the gripping force of the second gripping force history information does not exceed a predetermined threshold. Details of this predetermined condition will be described later with reference to FIGS. 8 and 9.

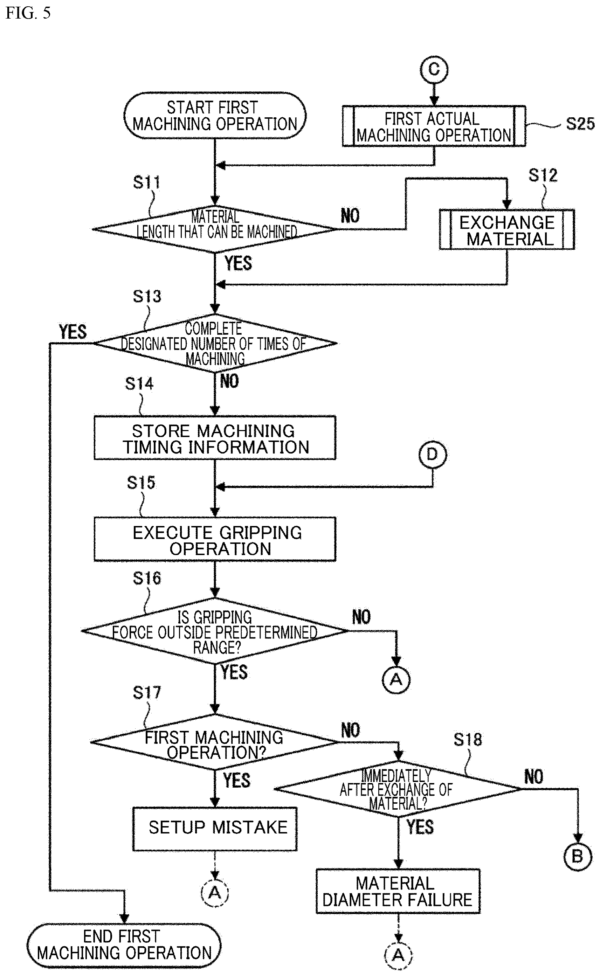

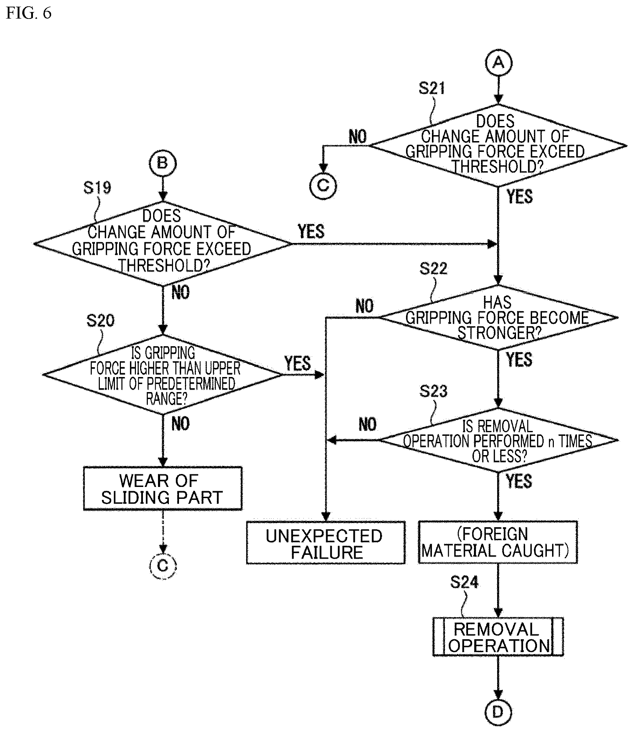

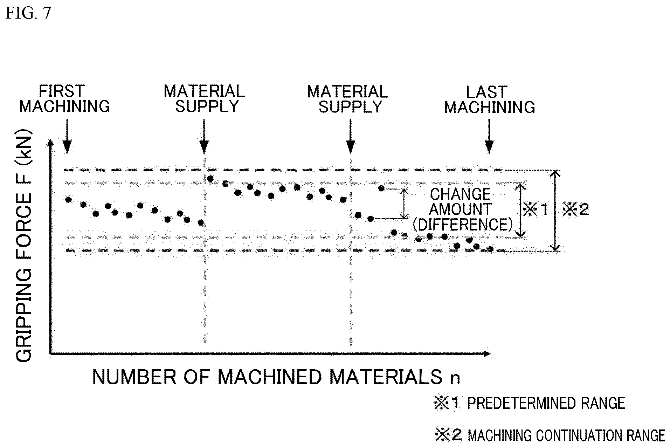

FIGS. 5 and 6 are flowcharts illustrating the first machining operation that uses the first spindle illustrated in FIG. 1. The operations indicated in these flowcharts are operations executed under control of the control apparatus 2. Furthermore, FIG. 7 is a graph showing an example of a gripping force of each gripping operation of the first spindle 4 from a first machining operation to a last machining operation.

Before starting the machining operation, an operator of the NC lathe 1 performs setup work such as adjustment of each component of the NC lathe 1. Furthermore, after selecting the NC program to execute and designating the number of products (the number of cycles) to machine using the operating unit 11, a machining start command is input. Thus, the NC lathe 1 starts continuous machining of repeatedly executing machining operations according to the selected NC program a number of times corresponding to the number of products. Note that, in the description of the machining operation, the first machining operation will be described first, and then the second machining operation will be described similarly to the order of machining operations to be actually executed.

As illustrated in FIG. 5, when the first machining operation is started, the control apparatus 2 determines whether or not the length of the material W1 is equal to or longer than the length by which a product can be manufactured (step S11). When the length of the material W1 is shorter than the length by which the product can be manufactured (NO in step S11), the control apparatus 2 issues a command to the bar feeder 10 to cause the bar feeder 10 to execute an operation of exchanging the above-described material W1 (step S12).

When the length of the material W1 is equal to or longer than the length by which the product can be manufactured (YES in step S11) or when the exchange operation of the material W1 in step S12 is completed, the control apparatus 2 determines whether or not machining of the designated number of products is completed by reading the number-of-times-of-manufacturing counter provided to the counter 215 (step S13). The number-of-times-of-manufacturing counter is zero at the time of the first machining operation and is counted up every time the machining operation is completed. When machining of the designated number of products is completed (YES in step S13), the first machining operation is ended.

When it is determined that machining of the designated number of products is not completed (NO in step S13), the control apparatus 2 stores in the machining timing information storage unit 211 information indicating whether or not the current machining operation is the first machining operation, and information indicating whether or not the current machining operation is a machining operation immediately after exchange of the material W1 is executed and the new material W1 is newly supplied to the first spindle 4 (step S14).

In this step S14, in a case where the value of the number-of-times-of-manufacturing counter is zero, the control apparatus 2 stores in the machining timing information storage unit 211 an initial flag indicating that the current machining operation is the first machining operation, and, in a case where the value of the number-of-times-of-manufacturing counter is other than zero, the control apparatus 2 deletes this initial flag from the machining timing information storage unit 211. Note that, in place of the initial flag, other information that is, for example, information of the value itself of the number-of-times-of-manufacturing counter and that makes it possible to distinguish whether or not the current machining operation is the first machining operation may be stored. Furthermore, in a case where it is determined in step S11 that the length of the material W1 is shorter than the length by which the product can be manufactured, the control apparatus 2 stores an immediately-after-exchange flag in the machining timing information storage unit 211, and, in a case where it is determined that the length is equal to or longer than the length by which the product can be manufactured, the control apparatus 2 deletes the immediately-after-exchange flag. Note that, in place of the immediately-after-exchange flag, other information that is, for example, information on whether or not step S12 has been executed in the current cycle, and that makes it possible to distinguish whether or not the machining operation is a machining operation immediately after the new material W1 is newly supplied to the first spindle 4 may be stored.

Next, the NC lathe 1 executes the gripping operation of the first spindle 4 according to the gripping command of the NC program (step S15). In this step S15, the gripping force deriving means 22 derives the gripping force of the collet chuck 48 for the material W1 based on the strain of the shifter lever 33 detected by the strain detection means 333. Furthermore, the gripping force derived by the gripping force deriving means 22 is associated with the stored information of the time and stored in the first gripping force information storage unit 212. The information of the gripping force stored at this time is the first current gripping force information.

When the gripping operation is completed, the determination means 23 determines whether or not the gripping force of the first current gripping force information stored this time in the first gripping force information storage unit 212 is outside of a predetermined range and outside of a machining continuation range (step S16). As illustrated in FIG. 7, the machining continuation range has an upper limit higher and a lower limit smaller than the predetermined range. Note that these predetermined range and machining continuation range are set by a manufacturer of the NC lathe 1, yet may be configured to be able to be changed by an operator's input. The predetermined range is a range that makes it possible to continue the machining operation without any problem. A range outside of the predetermined range and within the machining continuation range is a range in which a warning is issued, yet the machining operation can be continued. Furthermore, a range outside of the machining continuation range is a range in which the machining operation is interrupted. Note that the machining continuation range may be matched with the predetermined range. In a case where it is determined that the gripping force of the first current gripping force information is not outside of the predetermined range (within the predetermined range) (NO in step S16), the processing proceeds to step S21 to be described later.

In a case where the gripping force of the first current gripping force information is outside of the predetermined range (YES in step S16), the determination means 23 determines whether or not the current machining operation is the first machining operation by reading whether or not the initial flag is stored in the machining timing information storage unit 211 (step S17). The determination means 23 determines that the current machining operation is the first machining operation if the initial flag is stored in the machining timing information storage unit 211, and determines that the current machining operation is a second or subsequent machining operation if the initial flag is not stored.

In the case of the first machining operation (YES in step S17), the determination means 23 determines that the gripping failure is occurring due to a setup mistake, and causes the display unit 12 to display the occurrence of the gripping failure. Furthermore, in a case where it is determined in step S16 that the gripping force of the first current gripping force information is outside of the machining continuation range, the control apparatus 2 causes the NC lathe 1 to stop due to the error. On the other hand, in a case where it is determined in step S16 that the gripping force of the first current gripping force information is outside of the predetermined range and within the machining continuation range, the occurrence of the gripping failure due to the setup mistake is displayed on the display unit 12 and the processing proceeds to step S21 to be described later.

In the case of the second or subsequent machining operation (NO in step S17), the determination means 23 determines whether or not the current machining operation is a machining operation immediately after the material W1 is newly supplied to the first spindle 4 by reading whether or not the immediately-after-exchange flag is stored in the machining timing information storage unit 211 (step S18). That is, the determination means 23 determines that the current machining operation is the machining operation immediately after the bar feeder 10 newly supplies the material W1 to the first spindle 4 if the immediately-after-exchange flag is stored in the machining timing information storage unit 211, and determines that the machining operation is not the machining operation immediately after the supply if the immediately-after-exchange flag is not stored.

In the case of the machining operation immediately after the material W1 is newly supplied (YES in step S18), the determination means 23 determines that the gripping failure is occurring due to a material diameter failure of the supplied material W1, and causes the display unit 12 to display the occurrence of the gripping failure. Note that, as illustrated in FIG. 7, the material W1 is supplied at a timing when a plurality of products are manufactured and the material W1 becomes too short. FIG. 7 illustrates an example where the material W1 is supplied every time 12 products are manufactured (12 cycles). Furthermore, in a case where it is determined in step S16 that the gripping force of the first current gripping force information is outside of the machining continuation range, the control apparatus 2 causes the NC lathe 1 to stop due to the error. On the other hand, in a case where it is determined in step S16 that the gripping force of the first current gripping force information is outside of the predetermined range and within the machining continuation range, the occurrence of the gripping failure due to the material diameter failure is displayed on the display unit 12 and the processing proceeds to step S21 to be described later.

In a case where the machining operation is not the machining operation immediately after the material W1 is newly supplied (NO in step S18), the determination means 23 determines whether or not the change amount of the gripping force of the first current gripping force information with respect to the gripping force of the first gripping force history information exceeds the predetermined threshold as illustrated in FIG. 6 (step S19). Note that this threshold is set by the manufacturer of the NC lathe 1, yet may be changed by an operator's input. As illustrated in FIG. 7, this determination is performed using the threshold by comparing a difference between the gripping force of the first gripping force history information and the gripping force of the first current gripping force information, and the threshold regardless of the predetermined range and the machining continuation range.

As illustrated in FIG. 6, in a case where the change amount of the gripping force of the first current gripping force information with respect to the gripping force of the first gripping force history information exceeds the threshold (YES in step S19), the processing proceeds to step S22. If the change amount of the gripping force of the first current gripping force information with respect to the gripping force of the first gripping force history information does not exceed the threshold (NO in step S19), the determination means 23 then determines whether or not the gripping force of the first current gripping force information is higher than the upper limit of the predetermined range (step S20).

In a case where the gripping force of the first current gripping force information is higher than the upper limit of the predetermined range (YES in step S20), the determination means 23 determines that the gripping failure has been caused by an unexpected cause. In this case, the control apparatus 2 displays on the display unit 12 that the gripping failure has been caused by the unexpected cause, and causes the NC lathe 1 to stop due to an error. In a case where the gripping force of the first current gripping force information is not higher than the upper limit of the predetermined range (NO in step S20), the determination means 23 determines that the gripping failure is occurring due to wear between the cam surface 42a of the shifter 42 and a sliding part such as the claw distal end portion 43b of the claw member 43, and causes the display unit 12 to display that the gripping failure has been caused by the wear. Furthermore, in a case where it is determined in step S16 that the gripping force of the first current gripping force information is outside of the machining continuation range, the control apparatus 2 causes the NC lathe 1 to stop due to the error. On the other hand, in a case where it is determined in step S16 that the gripping force of the first current gripping force information is outside of the predetermined range and within the machining continuation range, the occurrence of the gripping failure due to the wear of the sliding part is displayed on the display unit 12, and the processing proceeds to step S25 to be described later.

In a case where it is determined in previous step S16 that the gripping force of the first current gripping force information is not outside of the predetermined range (NO in step S16), the determination means 23 determines whether or not the change amount of the gripping force of the first current gripping force information with respect to the gripping force of the first gripping force history information exceeds the predetermined threshold (step S21). Note that, as described above, the determination in step S21 may be also executed via step S17 or step S18.

In a case where the change amount of the gripping force of the first current gripping force information with respect to the gripping force of the first gripping force history information exceeds the threshold (YES in step S19 or YES in step S21), the determination means 23 then determines whether or not the gripping force of the first current gripping force information has become stronger than the gripping force of the first gripping force history information (step S22).

In a case where the gripping force of the first current gripping force information has not become stronger than the gripping force of the first gripping force history information (NO in step S22), the determination means 23 determines that the gripping failure has been caused by an unexpected cause. In this case, the control apparatus 2 displays on the display unit 12 that the gripping failure has been caused by the unexpected cause, and causes the NC lathe 1 to stop due to an error. In a case where the gripping force of the first current gripping force information has become stronger than the gripping force of the first gripping force history information (YES in step S22), the determination means 23 determines whether or not the number of times of removal operations to be described later is n times or less by reading a first removal counter provided to the counter 215 (step S23). This n is a numerical value set by the operator.

In a case where the number of times of the removal operation exceeds the n times (NO in step S23), the determination means 23 determines that the gripping failure has been caused by an unexpected cause. In this case, the control apparatus 2 displays on the display unit 12 that the gripping failure has been caused by the unexpected cause, and causes the NC lathe 1 to stop due to an error. In a case where the number of times of the removal operation is the n times or less (YES in step S23), since there is a high probability that a foreign material such as chips is caught between the collet chuck 48 and the material W1, and machining can be continued if the foreign material can be removed in this case, the control apparatus 2 executes the removal operation (step S24).

In the removal operation in step S24, the control apparatus 2 expands the diameter of the collet chuck 48, brings the first spindle 4 into the release state, and then causes the first spindle 4 to reciprocate in the Z1-axis direction. Consequently, the first spindle 4 and the material W1 relatively move, so that it is possible to remove the foreign material caught by the collet chuck 48. It is highly possible that a foreign material between the collet chuck 48 and the material W1 in particular can be removed by this removal operation. The control apparatus 2 counts up the first removal counter when execution of step S24 is completed, returns to step S15 illustrated in FIG. 5, and executes processing again from the gripping operation.

In a case where it is determined in step S21 that the change amount of the gripping force does not exceed the predetermined threshold (NO in step S21), the NC lathe 1 executes a first actual machining operation that is an operation of manufacturing a distal end side portion of a product using the first spindle 4 according to the NC program as illustrated in FIG. 5 (step S25). This step S25 also includes an operation of passing the cut material W2 to the second spindle 8. Furthermore, in this step S25, the control apparatus 2 resets the first number-of-times-of-removal counter. Note that the first actual machining operation in step S25 is also executed via step S20 as described above. The NC lathe 1 executes these step S11 to step S25 until a number-of-products counter reaches the designated number of products.

FIGS. 8 and 9 are flowcharts illustrating the second machining operation that uses the second spindle 8 illustrated in FIG. 1. The operation illustrated in these flowcharts is an operation executed under control of the control apparatus 2.

As illustrated in FIG. 8, similarly to step S13, the control apparatus 2 determines whether or not machining of the designated number of products is completed by reading the number-of-times-of-manufacturing counter provided to the counter 215 (step S31). In a case where machining of the designated number of products is completed (YES in step S31), the second machining operation that uses the second spindle 8 is ended. When it is determined that machining of the designated number of products is not completed (NO in step S31), the control apparatus 2 executes master bar measurement (step S32). According to this master bar measurement, a columnar master bar installed in advance in the NC lathe 1 and accurately manufactured using a material that is hardly thermally deformed is gripped by the second spindle 8, and the gripping force deriving means 22 derives a gripping force at this time using a detection result of the second strain detection means. Since a gripping portion of the cut material W2 gripped by the second spindle 8 is usually a portion machined using the first spindle 4, the gripping force of the second spindle 8 at a time when the cut material W2 is gripped is affected by accuracy of machining that uses the first spindle 4. By contrast with, by measuring the gripping force that uses the master bar having a known outer diameter, it is possible to accurately measure the gripping force of the second spindle 8 without being affected by the accuracy of machining that uses the first spindle 4.

When the master bar measurement is completed, the determination means 23 determines whether or not the gripping force obtained by the master bar measurement is outside of the predetermined range and outside of the machining continuation range (step S33). These predetermined range and machining continuation range of the second spindle 8 are common to the first spindle 4, yet may be set as a range unique to the second spindle 8.

**In** a case where it is determined that the gripping force measured in step S32 is outside of the predetermined range (YES in step S33), the determination means 23 then determines whether or not this measured gripping force is lower than the lower limit of the predetermined range (step S34). In a case where the measured gripping force is higher than the lower limit of the predetermined range (NO in step S34), the determination means 23 determines that the gripping failure has been caused by an unexpected cause. In this case, the control apparatus 2 displays on the display unit 12 that the gripping failure has been caused by the unexpected cause, and causes the NC lathe 1 to stop due to an error. In a case where the measured gripping force is lower than the lower limit of the predetermined range (YES in step S34), the determination means 23 determines that the gripping failure is occurring due to wear of the cam surface 42a of the shifter 42 and a sliding part such as the claw distal end portion 43b of the claw member 43, and causes the display unit 12 to display that the gripping failure has been caused by the wear. Furthermore, in a case where it is determined in step S33 that the measured gripping force is outside of the machining continuation range, the control apparatus 2 causes the NC lathe 1 to stop due to the error. On the other hand, in a case where it is determined in step S33 that the measured gripping force is outside of the predetermined range and within the machining continuation range, the occurrence of the gripping failure due to the wear of the sliding part is displayed on the display unit 12, and the processing proceeds to step S42 to be described later.

In a case where it is determined that the gripping force measured in step S32 is not outside of the predetermined range (NO in step S33), the NC lathe 1 executes a gripping operation of gripping with the second spindle 8 the cut material W2 machined by the first machining operation (step S35). In this step S35, the gripping force deriving means 22 derives the gripping force of the second collet chuck 81 for the cut material W2. Furthermore, the gripping force derived by the gripping force deriving means 22 is associated with the stored information of the time and stored in the second gripping force information storage unit 213. The information of the gripping force stored at this time is the second current gripping force information.

When the gripping operation is completed, the determination means 23 determines whether or not the gripping force of the second current gripping force information stored this time in the second gripping force information storage unit 213 is outside of the predetermined range (step S36). In this step S36, too, whether or not the gripping force is outside of the predetermined range and whether or not the gripping force is outside of the machining continuation range are determined. When it is determined that the gripping force of the second current gripping force information is not outside of the predetermined range (within the predetermined range) (NO in step S36), the processing proceeds to step S42 to be described later.

When step S36 is YES, the determination means 23 determines whether or not the current machining operation is the first machining operation by reading whether or not the initial flag is stored in the machining timing information storage unit 211 (step S37). In the case of the first machining operation (YES in step S37), the determination means 23 determines that the gripping failure is occurring due to a setup mistake, and causes the display unit 12 to display the occurrence of the gripping failure. Furthermore, in a case where it is determined in step S36 that the gripping force of the second current gripping force information is outside of the machining continuation range, the control apparatus 2 causes the NC lathe 1 to stop due to the error. On the other hand, in a case where it is determined in step S36 that the gripping force of the second current gripping force information is outside of the predetermined range and within the machining continuation range, the occurrence of the gripping failure due to the setup mistake is displayed on the display unit 12 and the processing proceeds to step S42 to be described later.

In the case of the second or subsequent machining operation (NO in step S37), the determination means 23 determines whether or not the change amount of the gripping force of the second current gripping force information with respect to the gripping force of the second gripping force history information exceeds the predetermined threshold as illustrated in FIG. 9 (step S38). This threshold is common to the first spindle 4, yet may be set as a threshold unique to the second spindle 8.

In a case where the change amount of the gripping force of the second current gripping force information with respect to the gripping force of the second gripping force history information exceeds the threshold (YES in step S38), the processing proceeds to step S43. If the change amount of the gripping force of the second current gripping force information with respect to the gripping force of the second gripping force history information does not exceed the threshold (NO in step S38), the determination means 23 then determines whether or not re-machining to be described later has already been executed by reading the re-machining counter (step S39). The re-machining counter is zero at the time of the first machining operation and is counted up every time re-machining is completed. Note that, in the present embodiment, an upper limit of the number of times of re-machining is set to one time, yet the upper limit of the number of times may be set to a plurality of times. Note that the upper limit of the number of times is set by the manufacturer of the NC lathe 1, yet may be changed by an operator's input. When the upper limit of the number of times is set to a plurality of times, the determination means 23 determines in step S39 whether or not the re-machining counter has reached the upper limit of the number of times.

In a case where re-machining has already been executed (YES in step S39), the determination means 23 then determines whether or not the gripping force of the second current gripping force information is lower than the lower limit of the predetermined range (step S40). In a case where the gripping force of the second current gripping force information is not higher than the upper limit of the predetermined range (YES in step S40), a cause is considered to be that the diameter of the cut material W2 at the gripping portion for the cut material W2 gripped by the second spindle 8 changes by a minute amount and becomes thicker than a desired diameter. Hence, the determination means 23 determines that a gripping failure is caused due to thermal displacement of the first tool post 6 or the like or wear of the first spindle tool T1, and causes the display unit 12 to display that the gripping failure has been caused by the thermal displacement or the wear and causes the NC lathe 1 to stop due to an error. Conversely, in a case where the gripping force of the second current gripping force information is not higher than the upper limit of the predetermined range (NO in step S40), a cause is considered to be that the diameter at the gripping portion for the cut material W2 gripped by the second spindle 8 changes by a minute amount and becomes thinner than the desired diameter. Hence, the determination means 23 determines that a gripping failure is caused due to thermal displacement of the first tool post 6 or the like, and causes the display unit 12 to display that the gripping failure has been caused by the thermal displacement and causes the NC lathe 1 to stop due to an error.

In a case where re-machining has not already been executed (YES in step S39), the correction value rewriting means 24 rewrites the movement correction value of the first tool post 6 stored in the movement correction value storage unit 214. The correction value rewriting means 24 has a relational expression or relation data between the gripping force of the second current gripping force information, and the movement correction value, and rewrites the movement correction value such that the gripping force of the second current gripping force information takes a media value in the predetermined range. Furthermore, the control apparatus 2 simultaneously executes control of cutting off and discarding the machined portion of the material W1 gripped by the first spindle 4. Furthermore, when the correction value rewriting means 24 completes rewriting, the control apparatus 2 executes the first machining operation that uses the first spindle 4 again from step S11 based on the rewritten movement correction value. Furthermore, the control apparatus 2 discards the cut material W2 gripped by the second spindle 8, counts up the re-machining counter, and executes the second machining operation that uses the second spindle 8 again from step S35 (this is step S41). In this step S41, the first machining operation executed again from step S11 and the second machining operation executed again from step S35 are the re-machining operation.

In a case where it is determined in previous step S36 that the gripping force of the second current gripping force information is not outside of the predetermined range (NO in step S36), the determination means 23 determines whether or not the change amount of the gripping force of the second current gripping force information with respect to the gripping force of the second gripping force history information exceeds the predetermined threshold (step S42). Note that, as described above, the determination in step S42 may be also executed via step S37 or step S34.

In a case where the change amount of the gripping force of the second current gripping force information with respect to the gripping force of the second gripping force history information exceeds the threshold (YES in step S38 or YES in step S42), the determination means 23 then determines whether or not the gripping force of the second current gripping force information has become stronger than the gripping force of the second gripping force history information (step S43).

In a case where the gripping force of the second current gripping force information has not become stronger than the gripping force of the second gripping force history information (NO in step S43), the determination means 23 determines that the gripping failure has been caused by an unexpected cause. In this case, the control apparatus 2 displays on the display unit 12 that the gripping failure has been caused by the unexpected cause, and causes the NC lathe 1 to stop due to an error. In a case where the gripping force of the second current gripping force information has become stronger than the gripping force of the second gripping force history information (YES in step S43), the determination means 23 determines whether or not the number of times of removal operations to be described later is n times or less by reading a second removal counter provided to the counter 215 (step S44). This n is common to n in step S23 that is the number of times of the removal operation of the first spindle 4, yet may be set as a numerical value unique to the second spindle 8.

In a case where the number of times of the removal operation exceeds the n times (NO in step S44), the determination means 23 determines that the gripping failure is caused by damage on the first spindle tool T1. In this case, the control apparatus 2 causes the display unit 12 to display that the gripping failure has been caused by the damage, and causes the NC lathe 1 to stop due to an error. In a case where the number of times of the removal operation is the n times or less (YES in step S44), since there is a high probability that a foreign material such as chips is caught between the second collet chuck 81 and the cut material W2, and machining can be continued if the foreign material can be removed in this case, the control apparatus 2 executes the removal operation (step S45).

In the removal operation in step S45, the control apparatus 2 expands the diameter of the second collet chuck 81, brings the second spindle 8 into the release state, and then causes a second coolant discharge unit 91 to discharge a coolant toward the second spindle 8. Thereafter, the control apparatus 2 causes the air blowing apparatus of the second spindle 8 to blow out air from the rear end side toward the distal end side of the second spindle 8. Thus, it is possible to wash away and blow away a foreign material caught in the second collet chuck 81. It is highly possible that a foreign material between the second collet chuck 81 and the cut material W2 in particular can be removed by this removal operation. Note that, in this removal operation, only one of the second coolant discharge unit 91 and the air blowing apparatus may be operated, and both of the second coolant discharge unit 91 and the air blowing apparatus may be operated simultaneously. The control apparatus 2 counts up the second removal counter when execution of step S45 is completed, returns to step S35 illustrated in FIG. 8, and executes processing from the gripping operation again.

When it is determined in step S42 that the change amount of the gripping force does not exceed the predetermined threshold (NO in step S42), the NC lathe 1 executes a second actual machining operation that is an operation of manufacturing a rear end side portion (cut end side portion) of a product using the second spindle 8 according to the NC program as illustrated in FIG. 8 (step S46). This step S46 also includes an operation of ejecting a product manufactured when the machining operation of one cycle is completed. Furthermore, in this step S46, the control apparatus 2 resets the second number-of-times-of-removal counter, and counts up the number-of-times-of-manufacturing counter. The NC lathe 1 executes these step S31 to step S46 until the number-of-products counter reaches the designated number of products.

According to the NC lathe 1 according to the above-described present embodiment, the determination means 23 determines whether or not a gripping failure of the first spindle 4 is occurring based on at least one information of the information on at which timing of a machining operation a current machining operation stored in the machining timing information storage unit 211 is and the first gripping force history information, and the first current gripping force information, and classifies and determines a type of the gripping failure per cause depending on cases. Accordingly, it is possible to precisely determine a gripping failure. Similarly, the determination means 23 determines whether or not a gripping failure of the second spindle 8 is occurring based on at least one information of the information on at which timing of a machining operation a current machining operation stored in the machining timing information storage unit 211 is and the second gripping force history information, and the second current gripping force information, and classifies and determines a type per cause of the gripping failure depending on cases. Accordingly, it is possible to precisely determine a gripping failure. Furthermore, the determination means 23 classifies the type of the gripping failure per cause, so that it is easy for the operator to deal with the failure.

Furthermore, the determination means 23 compares a change in the gripping force and the threshold, so that it is possible to determine as a gripping failure the change in the gripping force caused when a small foreign material is caught in the collet chuck 48 or the second collet chuck 81. Consequently, it is possible to prevent a product damaged by this foreign material from being manufactured. Furthermore, at a time of this determination, it is determined that the gripping failure has occurred due to the caught foreign material in a case where an increase/decrease in a current gripping force with respect to a past gripping force is compared and the current gripping force has increased, so that it is possible to accurately determine the type of the gripping failure. Furthermore, the foreign material removal operation is executed when it is highly probable that a foreign material is caught, so that it is possible to reduce a risk that the machining operation stops due to gripping failure.

In addition, when the gripping force of the second current gripping force information is outside of the predetermined range and the change amount of the gripping force of the second spindle 8 does not exceed the threshold, the correction value rewriting means 24 rewrites the movement correction value to an appropriate value to execute performs re-machining, so that machining accuracy improves and it is possible to reduce the risk that the machining operation stops due to gripping failure.

The present invention is not limited to the above-described embodiment, and can be variously modified within the scope set forth in the aspects. For example, the present embodiment has described the example where the present invention is applied to the so-called Swiss-type NC lathe 1 including the guide bush 5, the present invention may be applied to other machine tools such as lathes and machining centers that do not include the guide bush 5. Furthermore, the second headstock 7, the second spindle 8, and the second tool post 9 may be omitted.

Note that components included only in the description of the above-described modified examples may be also applied to other modified examples.

## Claims

1. A machine tool that comprises a spindle including a gripping unit that grips a material of a bar shape, and machines the material gripped by the gripping unit and manufactures a plurality of products having an identical shape by repeatedly executing a machining operation, the machine tool including
determination means for executing determination on a gripping failure of the spindle based on at least one information of machining timing information and gripping force history information, and current gripping force information, the machining timing information indicating at which timing the machining operation is performed, the gripping force history information being information of a gripping force at a time when the gripping unit grips the material during the machining operations up to the previous machining operation, and the current gripping force information being information of a gripping force at a time when the gripping unit grips the material during a current machining operation.

2. the machine tool according to claim 1, wherein the determination means determines that, when the machining timing information is information indicating the first machining operation and when a gripping force of the current gripping force information is outside of a predetermined range, a gripping failure due to a setup mistake is occurring.

3. The machine tool according to claim 1, wherein
the machine tool is connected with a bar feeder in which a plurality of the materials is stored, and that sequentially supplies the stored materials to the spindle, and
the determination means determines that, when the machining timing information is information indicating the machining operation immediately after the bar feeder newly supplies the material to the spindle and when the gripping force of the current gripping force information is outside of a predetermined range, a gripping failure due to a material diameter failure of the material supplied by the bar feeder is occurring.

4. The machine tool according to claim 1, wherein the determination means determines that, when a change amount of the gripping force of the current gripping force information with respect to the gripping force of the gripping force history information exceeds the threshold, the gripping failure is occurring.

5. The machine tool according to claim 4, wherein the determination means classifies a type of a gripping failure based on whether the gripping force of the current gripping force information with respect to the gripping force of the gripping force history information has increased or decreased when the change amount exceeds the threshold.

6. The machine tool according to claim 4, further comprising a control apparatus that, when the change amount exceeds the threshold and when the gripping force of the current gripping force information with respect to the gripping force of the gripping force history information increases, executes a removal operation of removing a foreign material caught in the gripping unit.

7. The machine tool according to claim 1, wherein the determination means classifies a type of the gripping failure based on a combination of whether or not the gripping force of the current gripping force information is outside of a predetermined range and whether or not a change amount of the gripping force of the current gripping force information with respect to the gripping force of the gripping force history information exceeds a threshold.

8. The machine tool according to claim 1, further comprising:
a tool post to which a tool that machines the material is attached and that moves together with the tool;
storage means for storing a movement correction value for correcting a designated movement position designated by a machining program; and
correction value rewriting means for rewriting the movement correction value stored in the storage means,
wherein the correction value rewriting means rewrites the movement correction value stored in the storage means when the determination means determines that the gripping force of the current gripping force information is outside of a predetermined range and a change amount of the gripping force of the current gripping force information with respect to the gripping force of the gripping force history information does not exceed a threshold.
